Europäisches Patentamt

European Patent Office

Office européen des brevets

(19)

(11) Publication number: **0 133 005 B1**

# (12) EUROPEAN PATENT SPECIFICATION

(45) Date of publication of patent specification: **27.02.91**   (51) Int. Cl.⁵: **G01R 31/28**, B61L 1/18

(21) Application number: **84305005.5**

(22) Date of filing: **24.07.84**

(54) **Safe operation proving of a controlled system.**

(30) Priority: **29.07.83 GB 8320514**
**29.07.83 GB 8320486**

(43) Date of publication of application:
**13.02.85 Bulletin 85/07**

(45) Publication of the grant of the patent:
**27.02.91 Bulletin 91/09**

(84) Designated Contracting States:
**CH DE FR IT LI NL SE**

(56) References cited:
**EP-A- 0 013 521**
**EP-A- 0 082 687**
**DE-A- 2 723 570**
**FR-A- 2 393 316**
**GB-A- 2 075 311**

(73) Proprietor: **WESTINGHOUSE BRAKE AND SIG-
NAL HOLDINGS LIMITED
Pew Hill
Chippenham Wiltshire(GB)**

(72) Inventor: **Brown, Christopher Robert
65 New Road
Bromham Wiltshire(GB)**

(74) Representative: **Bird, Vivian John et al
PAGE & CO. Temple Gate House
Temple Gate Bristol, BS1 6PL(GB)**

## Description

The present invention relates to proving safe operation of an electronic circuit.

The present invention is particularly useful in systems where a decision concerning safety is based upon an output signal, so that incorrect operation of signal processing circuits producing that signal can directly affect the safety of the system. For example, in a mass transit system, such as an underground railway, having an automatic train protection (ATP) system in which a coded signal representing safe maximum train speed is transmitted to the train for analysis by the train, comparison is effected with a signal representing the measured speed of the train. If the coded signal is incorrectly decoded or is corrupted before comparison, then a wrong decision concerning the maximum speed at which it is safe for the train to travel may be the result. One receiver apparatus for an automatic train protection system of this type is described in GB-A- 2 017 991. EP-A-0 013 521 discloses a system in which a modulated carrier signal is not transmitted to a track circuit unless the modulation frequency is detected to be correct.

Also, in the railway signalling field, the present invention may be useful in coded track circuits in which a coded signal is transmitted between a track circuit transmitter and a track circuit receiver via the running rails. When a section of track is unoccupied the signal reaches the receiver, but when a train is present in the section the rails are electrically shorted together thus preventing propagation of the signal along the section. The present invention may be applied to the receiver apparatus in order to verify its correct operation at all times. A railway track circuit receiver of this type to which the invention may be applied is described in GB-A-2 114 342 which discloses the pre-characterising features of claims 1 and 2.

According to the present invention from one aspect, there is provided a method of proving safe operation of an electronic circuit an output signal of which in at least one state represents a controlled operating state of a system the safety of which is to be assured, the method comprising transforming an input signal to said electronic circuit from said system from the time domain into the frequency domain by periodically sampling the input signal to form a finite number of analogue signal samples, digitising said samples and using said samples as starting level data in the evaluation of a discrete Fourier transform algorithm so as to detect the amplitudes of different frequency bandwidth elements of said input signal, the method being characterised by: superimposing upon said input signal an alternating proving signal of predetermined frequency and amplitude, said circuit transforming said proving signal as well as said input signal from the time domain into the frequency domain so as to detect the amplitude of a frequency bandwidth element corresponding to said predetermined frequency; sensing the amplitude of said frequency bandwidth element corresponding to said predetermined frequency; and inhibiting said output signal or suspending operation of said electronic circuit if the amplitude of said frequency bandwidth element is less than a threshold level.

According to the present invention from another aspect, there is provided apparatus comprising an electronic circuit an output signal of which in at least one state represents a controlled operating state of a system the safety of which is to be assured, said electronic circuit transforming said input signal from the time domain into the frequency domain by periodically sampling the input signal to form a finite number of analogue signal samples, digitising said samples and using said samples as starting level data in the evaluation of a discrete Fourier transform algorithm so as to detect the amplitudes of different frequency bandwidth elements of said input signal, characterised in that said apparatus includes: means for superimposing upon said input signal an alternating proving signal of predetermined frequency and amplitude, said electronic circuit transforming said proving signal as well as said input signal from the time domain into the frequency domain so as to detect the amplitude of a frequency bandwidth element corresponding to said predetermined frequency; and means for sensing the amplitude of said frequency bandwidth element corresponding to said predetermined frequency and inhibiting said output signal or suspending operation of said electronic circuit if the amplitude of said frequency bandwidth element is less than a threshold level.

The present invention and how it may be carried into practice will now be described, by way of example only, with reference to the accompanying drawings, in which:

Figs. 1(a) and 1(b) schematically illustrate two alternative arrangements in which safe operation of signal processing circuitry is proved by use of a proving signal;

Fig. 2 (a) is a schematic block diagram of part of a jointless track circuit receiver; and

Figs. 2(b) and (c) show signal amplitude levels at the output of a mixer of Fig. 2(a) for an unoccupied and an occupied track section respectively.

A method according to the present invention is particularly useful for continuously proving the safe operation of an electronic circuit which is difficult or too complex to design to possess inherent fail-safe characteristics and where it is wished to avoid the expense, for example, of resorting to parallel redundancy techniques. In railway signalling, there are numerous instances where advantages of versatility, adaptability and economy through standardisation may be derived by adopting microprocessors to perform various signal processing functions. In particular, microprocessors, because of their speed of operation, may carry out several other tasks without incurring real time penalties in connection with the basic function.

However, microprocessors in common with other solid-state electronic circuits are not normally constructed to completely fail-safe designs and additional precautions have to be employed where a possible output failure state is potentially unsafe. This is normally referred to as a potential wrong side failure state.

The present invention is particularly convenient, for use in proving safe operation of a microprocessor (or like circuit) arranged to carry out a frequency spectrum analysis of normal input signals. Such an embodiment as this finds application in both railway track circuit receivers and in automatic train protection system receivers.

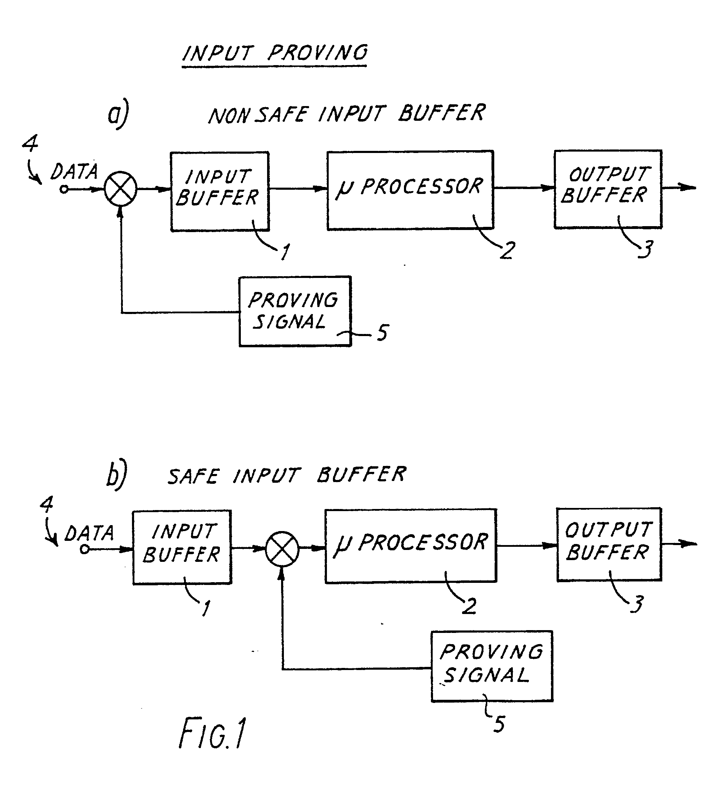

Fig. 1(a) shows part of a circuit which is used as a receiver for a coded railway track circuit. The receiver is divided into input buffer circuits in a block 1, a microprocessor 2 and output buffer circuits in a block 3. The input signal at a receiver signal input 4 comprises a carrier signal which is amplitude modulated at a transmitter identifying signal frequency. In the example being described, the input buffer circuits 1 contain analogue-to-digital and sample-and-hold circuits constructed using operational-amplifiers and other proprietary integrated circuits which have inherently unpredictable failure modes so that the failed state of any individual component and of the overall circuit cannot be predicted in advance and these are conventionally classified as "non-safe". The microprocessor 2 is programmed to perform a frequency spectrum analysis by means of a fast Fourier transform algorithm upon the data samples produced by the sample-and-hold circuits. The output of microprocessor 2 is in the form of an electronic histogram comprising a representation of the signal levels found in each of a multiplicity of different frequency spectrum bandwidth elements or frequency "bins". The output buffer circuits 3 contain circuits responsive to signal levels above a predetermined threshold in predetermined ones of the frequency bins.

A proving signal comprising a signal of fixed frequency and amplitude level is generated by a proving signal generator, indicated at block 5, and is superimposed upon the input signal at track circuit receiver input 4 in order that it may also be processed by the input buffer 1 and the microprocessor 2. In the output buffer circuits 3 receiving the output of microprocessor 2 there is a threshold circuit which is responsive to the signal level in the frequency bin corresponding to the frequency of the proving signal and which is connected to control means (not shown), for inhibiting the output of the microprocessor or suspending its operation.

In operation, the threshold circuit is arranged to sense whether the amplitude of the signal level in the frequency bin corresponding to the proving signal frequency is greater than or less than a predetermined threshold amplitude. If it is greater, then the microprocessor is permitted to continue operation whereas if it is less, then the output of the microprocessor is inhibited or operation of the microprocessor is suspended.

Referring now to Fig. 1(b) in which parts like those in Fig. 1(a) have like references, the circuits in the input buffer circuits 1 are of fail-safe design, by which it is meant that the failure states of all the circuits included are predictable and are known. Thus, the state which the input to microprocessor 2 will occupy if a failure occurs in buffer circuits 1 is known and it may be arranged to ensure that the consequential output occupies the most safe state. However, the microprocessor itself is still of "non-safe" design and for that reason the proving signal from block 5 is now superimposed upon the input to the microprocessor 2 for processing as before, the remainder of the circuit arrangement operating as before.

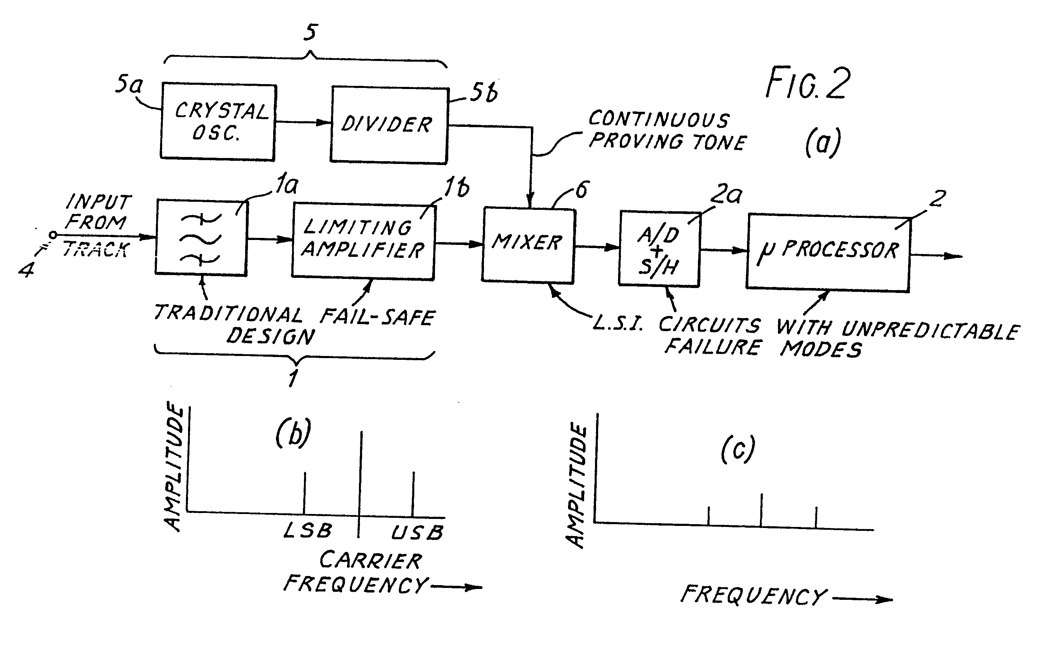

How the majority of a circuit arrangement according to Fig. 1b may be realised in practice will now be described in greater detail with reference to Figs. 2(a), (b) and (c), in the context of an automatic train protection system similar to that described in GB-A- 2 017 991.

Referring now to Fig. 2(a) there is shown a block diagram of a jointless track circuit receiver. The track signal at input 4 comprises a frequency modulated carrier signal which is applied to the input buffer circuits 1 of the receiver, the buffer circuits 1 having a band-pass filter 1a and a limiting amplifier 1b which are both of traditional fail-safe design, i.e. both circuits have predictable failure modes which result in a steady state d.c. voltage output. The output from amplifier 1b is connected to one input of a mixer 6, the other input of which receives a continuous proving tone signal derived from a crystal oscillator 5a and a frequency divider 5b. The raw input data for microprocessor 2 is collected by analogue-to-digital circuits and sample-and-hold circuits in a block 2a. The circuits of mixer 6, microprocessor 2 and block 2a are, in the example being described, large scale integrated (L.S.I) circuits which consequently have unpredictable failure modes and therefore are subjected to testing during each operational cycle of microprocessor 2.

There are also shown in Figs. 2(b) and (c) respectively signal amplitude levels at the output of mixer 6 for an unoccupied and an occupied track section respectively.

## Claims

1. A method of proving safe operation of an electronic circuit (1,2; or 2a, 2) an output signal of which in at least one state represents a controlled operating state of a system the safety of which is to be assured, the method comprising transforming an input signal to said electronic circuit from said system from the time domain into the frequency domain by periodically sampling the input signal to form a finite number of analogue signal samples, digitising said samples and using said samples as starting level data in the evaluation of a discrete Fourier transform algorithm so as to detect the amplitudes of different frequency bandwidth elements of said input signal, the method being characterised by: superimposing upon said input signal an alternating proving signal of predetermined frequency and amplitude, said circuit transforming said proving signal as well as said input signal from the time domain into the frequency domain so as to detect the amplitude of a frequency bandwidth element corresponding to said predetermined frequency; sensing the amplitude of said frequency bandwidth element corresponding to said predetermined frequency; and inhibiting said output signal or suspending operation of said electronic circuit if the amplitude of said frequency bandwidth element is less than a threshold level.

2. Apparatus comprising an electronic circuit (1,2; or 2a,2) an output signal of which in at least one state represents a controlled operating state of a system the safety of which is to be assured, said electronic circuit transforming said input signal from the time domain into the frequency domain by periodically sampling the input signal to form a finite number of analogue signal samples, digitising said samples and using said samples as starting level data in the evaluation of a discrete Fourier transform algorithm so as to detect the amplitudes of different frequency bandwidth elements of said input signal, characterised in that said apparatus includes: means (5,6) for superimposing upon said input signal an alternating proving signal of predetermined frequency and amplitude, said electronic circuit transforming said proving signal as well as said input signal from the time domain into the frequency domain so as to detect the amplitude of a frequency bandwidth element corresponding to said predetermined frequency; and means (3) for sensing the amplitude of said frequency bandwidth element corresponding to said predetermined frequency and inhibiting said output signal or suspending operation of said electronic circuit if the amplitude of said frequency bandwidth element is less than a threshold level.

3. Apparatus according to claim 2 operatively connected in a railway jointless track circuit transmitter, the apparatus being connected with the output signal path of the transmitter.

4. Apparatus according to claim 2 operatively connected in a railway jointless track circuit receiver to detect components of a complex received signal, the proving signal being superimposed upon a received track circuit signal.

5. Apparatus according to claim 2 operatively connected in a railway automatic train protection receiver to receive and decode a train protection signal.

## Revendications

1. Procédé d'essai de la sécurité du fonctionnement d'un circuit électronique (1,2;2a,2) dont un signal de sortie représente, dans l'un au moins de ses états, une condition opératoire contrôlée pour un système dont la sécurité de fonctionnement doit être assurée, ce procédé comprenant les étapes suivantes :
   - transformer un signal d'entrée du circuit électronique du système d'un domaine temporel en un domaine fréquentiel en échantillonnant périodiquement le signal d'entrée pour créer un nombre fini d'échantillons analogiques du signal,
   - digitaliser les échantillons et utiliser ces échantillons comme données de départ pour un algorithme d'évaluation d'une transformée de Fourier discrète afin de détecter les amplitudes des différentes unités de largeur de fréquence du signal d'entrée, ce procédé étant caractérisé en ce que :
   - on superpose sur ce signal d'entrée un signal de test alternatif de fréquence et d'amplitude prédéterminées, ce circuit transformant ce signal de test ainsi que ce signal d'entrée d'un domaine temporel en un domaine de fréquence afin de détecter l'amplitude de l'unité de largeur de fréquence correspondante à ce fréquence prédéterminée,

- mesurer l'amplitude de l'unité de largeur de fréquence, correspondante à la fréquence prédéterminée, et

- inhiber le signal de sortie ou suspendre l'opération du circuit électronique si l'amplitude de l'unité de largeur de fréquence est inférieure à un seuil.

2. Dispositif, au sein d'un système dont la sécurité de fonctionnement doit être assurée, comprenant un circuit électronique (1,2;2a,2) dont un signal de sortie représente, dans l'un de ses états, une condition opératoire contrôlée, ce circuit électronique transformant le signal d'entrée d'un domaine temporel en un domaine fréquentiel en échantillonnant périodiquement le signal d'entrée pour créer un nombre fini d'échantillons analogiques du signal, pour digitaliser ces échantillons et pour utiliser ces échantillons comme données de départ pour un algorithme d'évaluation de la transformée de Fourier discrète afin de détecter l'amplitude des différentes unités de largeur de fréquence du signal d'entrée, caractérisé en ce que ce dispositif comprend des moyens (5,6) pour superposer au signal d'entrée un signal de test alternatif de fréquence et d'amplitude prédéterminées, ce circuit électronique transformant ce signal de test ainsi que le signal d'entrée d'un domaine temporel en un domaine de fréquence afin de détecter l'amplitude de l'unité de largeur de fréquence correspondante a ladite fréquence prédéterminée ; et des moyens (3) pour mesurer l'amplitude de cette unité de largeur de fréquence correspondant à cette fréquence prédéterminée et soit inhiber ce signal de sortie ou soit suspendre l'opération du circuit électronique si l'amplitude de l'unité de largeur de fréquence est inférieure à un seuil.

3. Dispositif selon la revendication 2, fonctionnant dans un émetteur de circuit de voie ferroviaire sans joint, le dispositif étant branché sur le passage du signal de sortie de l'emetteur.

4. Dispositif selon la revendication 2, fonctionnant dans un émetteur de circuit de voie ferroviaire sans joint pour détecter les composants d'un signal complexe reçu, le signal de test étant superposé au signal de voie reçu.

5. Dispositif selon la revendication 2, fonctionnant dans un récepteur de protection automatique de train ferroviaire pour recevoir et décoder un signal de protection de train.

**Ansprüche**

1. Verfahren zum Prüfen der einwandfreien Funktion einer elektronischen Schaltung (1, 2; oder 2a, 2), wobei ein Ausgangssignal der Schaltung in zumindest einem Zustand einen überwachten Betriebszustand eines Systems darstellt, dessen Betriebssicherheit sichergestellt sein soll und wobei das Verfahren die Übertragung eines Eingangssignals auf die elektronische Schaltung von dem System aus dem Zeitbereich in den Frequenzbereich durch periodisches Abtasten des Eingangssignals zur Bildung einer begrenzten Anzahl analoger Signalabtastwerte, die Digitalisierung der Signalabtastwerte und die Verwendung der Signalabtastwerte als Anfangsdaten bei der Auswertung eines diskreten Fourier-Transformationsalgorithmus zur Detektion der Amplituden verschiedener Frequenzbandbreitenelemente umfaßt, **gekennzeichnet durch** folgende Verfahrensschritte:

Überlagerung des Eingangssignals durch ein alternierendes Prüfsignal vorgegebener Frequenz und Amplitude, wobei zur Detektion der Amplitude eines Frequenzbandbreitenelements entsprechend der vorgegebenen Frequenz die Schaltung das Prüfsignal ebenso wie das Eingabesignal vom Zeitbereich in den Frequenzbereich transformiert;

Ermittlung der Amplitude des Frequenzbandbreitenelements entsprechend der vorgegebenen Frequenz; und

Sperren des Ausgangssignals oder Einstellen des Betriebs der elektronischen Schaltung, falls das Frequenzbandbreitenelement geringer ist als ein Schwellenpegel.

2. Vorrichtung mit einer elektronischen Schaltung (1, 2; oder 2a, 2), wobei ein Ausgangssignal der Schaltung in zumindest einem Zustand einen überwachten Betriebszustand eines Systems darstellt, dessen Betriebssicherheit sichergestellt sein soll und wobei die Schaltung ein Eingangssignal von dem Zeitbereich in den Frequenzbereich durch periodisches Abtasten des Eingangssignals zur Bildung einer begrenzten Anzahl analoger Signalabtastwerte überträgt, die Signalabtastwerte digitalisiert und die Signalabtastwerte als Anfangsdaten bei der Auswertung eines diskreten Fourier-Transformationsalgorithmus zur Detektion der Amplituden verschiedener Frequenzbandbreitenelemente verwendet,

**dadurch gekennzeichnet**, daß die Vorrichtung Mittel (5, 6) zur Überlagerung des Eingangssignals durch ein alternierendes Prüfsignal vorgegebener Frequenz und Amplitude, wobei zur Detektion der Amplitude eines Frequenzbandbreitenelements entsprechend der vorgegebenen Frequenz die Schaltung das Prüfsignal ebenso wie das Eingabesignal vom Zeitbereich in den Frequenzbereich transformiert, und

Mittel (3) zur Ermittlung der Amplitude des Frequenzbandbreitenelements entsprechend der vorgegebenen Frequenz und zum Sperren des Ausgangssignals oder Einstellen des Betriebs der elektronischen Schaltung, falls das Frequenzbandbreitenelement geringer ist als ein Schwellenpegel, aufweist.

3. Vorrichtung nach Anspruch 2, dadurch gekennzeichnet, daß die Vorrichtung mit einem Ausgangssignalpfad eines Senders in einem geschlossenen, nahtlosen Eisenbahnschienennetz funktional verbunden ist.

4. Vorrichtung nach Anspruch 2, dadurch gekennzeichnet, daß die Vorrichtung zur Detektion von Komponenten eines komplexen, empfangenen Signals mit einem Empfänger in einem geschlossenen, nahtlosen Eisenbahnschienennetz funktional verbunden ist und daß das Prüfsignal einem empfangenen Signal aus dem Eisenbahnschienennetz überlagert wird.

5. Vorrichtung nach Anspruch 2, dadurch gekennzeichnet, daß die Vorrichtung mit einem Empfänger zum automatischen Schutz eines Zuges in einem Eisenbahnschienennetz verbunden ist und zur Aufnahme und Dekodierung eines den Zug schützenden Signals dient.

INPUT PROVING

a)   NON SAFE INPUT BUFFER

4
DATA → ⊗ → INPUT BUFFER — 1 → μ PROCESSOR — 2 → OUTPUT BUFFER — 3 →

PROVING SIGNAL — 5

b)   SAFE INPUT BUFFER

4
DATA → INPUT BUFFER — 1 → ⊗ → μ PROCESSOR — 2 → OUTPUT BUFFER — 3 →

PROVING SIGNAL — 5

FIG.1

FIG. 2 (a)

5
5a CRYSTAL OSC. → DIVIDER 5b → CONTINUOUS PROVING TONE

INPUT FROM TRACK 4 → [1a ≋] → LIMITING AMPLIFIER 1b → MIXER 6 → A/D + S/H 2a → μ PROCESSOR 2

TRADITIONAL FAIL-SAFE DESIGN 1

L.S.I. CIRCUITS WITH UNPREDICTABLE FAILURE MODES

(b)

AMPLITUDE

LSB    USB

CARRIER FREQUENCY →

(c)

AMPLITUDE

FREQUENCY →

EP 0 133 005 B1